# EUROPEAN PATENT APPLICATION

(11) **EP 2 039 928 A1**
(43) Date of publication of application: **25.03.2009**
(21) Application number: 07116874.4
(22) Date of filing: 20.09.2007
(51) Int. Cl.: F03D 3/04

(54) **Wind turbine**

(71) Applicant: Sol Participations sàrl, 1426 Luxembourg (LU)
(72) Inventor: Felten, Guy, 1426, Luxembourg (LU)
(74) Representative: Lambert, Romain Ramon

(57) **Abstract**

A wind turbine (10) comprises a vane wheel (12) having a rotational axis (18) and a plurality of vanes (20), the rotational axis (18) being essentially horizontal and essentially perpendicular to the direction of wind. The wind turbine (10) further comprises and a guiding element (16) for guiding incoming wind onto the vanes (20) of the vane wheel (12). The guiding element (16) is wing-shaped and has an essentially straight slow side (22) and a curved fast side (24), the fast side (24) comprising a curvature forcing incoming wind to accelerate over the fast side (24), wherein the guiding element (16) is arranged in such a way as to guide incoming wind from its fast side (24) onto the vanes (20) of the vane wheel (12).

## Description

### TECHNICAL FIELD

The present invention generally relates a wind turbine for converting the kinetic energy in wind into mechanical energy. If the mechanical energy is used directly by machinery, such as a pump or grinding stones, the machine is usually called windmill. If the mechanical energy is then converted to electricity, the machine is called a wind generator or wind energy converter (WEC).

### BACKGROUND ART

Recently, wind turbines have received increased attention as an environmentally safe and relatively inexpensive alternative energy source. With this growing interest, considerable efforts have been made to develop wind turbines, in particular wind energy converters, that are reliable and efficient.

Generally, the wind turns multiple blades connected to a rotor, thereby generating electricity. The spin of the blades caused by the wind spins a shaft of the rotor, which connects to a generator that generates electricity. Specifically, the rotor is mounted within a housing or nacelle, which is positioned on top of a truss or tubular tower. Utility grade wind turbines (e.g., wind turbines designed to provide electrical power to a utility grid) can have large rotors (e.g., 30 or more meters in diameter). Blades on these rotors transform wind energy into a rotational torque or force that drives one or more generators, rotationally coupled to the rotor through a gearbox. The gearbox may be used to step up the inherently low rotational speed of the turbine rotor for the generator to efficiently convert mechanical energy to electrical energy, which is provided to a utility grid. Some turbines utilize generators that are directly coupled to the rotor without using a gearbox.

Most efforts to render such wind turbines more reliable and more efficient have gone into providing improved gearboxes, modifying the shape of the blades or using different materials. Few solutions drastically modify the design of such wind turbines.

WO 2006/117593 discloses an airborne wind turbine with a vane wheel having a rotational axis and a plurality of vanes, wherein the rotational axis essentially horizontal and essentially perpendicular to the direction of wind.

Another wind turbine is disclosed in WO 2004/109103, wherein a vane wheel having a rotational axis and a plurality of vanes is arranged on the rooftop of a building. This wind turbine comprises a funnel-like guiding element for guiding incoming wind onto the vanes of the vane wheel.

### OBJECT OF THE INVENTION

The object of the present invention is to provide an improved wind turbine. This object is achieved by a wind turbine as claimed in claim 1.

### GENERAL DESCRIPTION OF THE IN\/ENTION

To achieve this object, the present invention proposes a wind turbine comprising a vane wheel having a rotational axis and a plurality of vanes, the rotational axis being essentially horizontal and essentially perpendicular to the direction of wind, and a guiding element for guiding incoming wind onto the vanes of the vane wheel. According to an important aspect of the present invention, the guiding element is wing-shaped and has an essentially straight slow side and a curved fast side, the fast side comprising a curvature forcing incoming wind to accelerate over the fast side, wherein the guiding element is arranged in such a way as to guide incoming wind from its fast side onto the vanes of the vane wheel.

The acceleration of the incoming wind before reaching the vane wheel allows increasing the efficiency of these wind turbines.

Such wind turbines are subject to fewer dimensional constraints than their three-bladed counterparts generally used today for electricity production. Indeed, such three-bladed wind turbines generally have a diameter ranging between 40 and 80 meters, sometimes more, whereas the diameter of the vane wheel according to the present invention can be considerably smaller. The diameter and the width of the vane wheel can in fact be chosen to suit almost any given situations.

Due to their smaller size, the wind turbines according to the present invention are less of an eyesore in the countryside. They also do not necessarily have to be mounted so high off the ground. It is even possible to install them directly on the ground in locations where wind speeds near the ground are strong enough, such as e.g. on hilltops.

It should also be noted that the proposed wind turbine allows for a very simple design, allowing the construction of low cost, yet efficient wind turbines.

Preferably, the guiding element has a cross-section similar to the cross-section of an airplane wing. Such a shape allows maximising the acceleration effect of the curvature on the fast side of the guiding element, thereby improving efficiency of the wind turbine.

According to a preferred embodiment of the invention, the vane wheel is arranged in a recess formed on the fast side of the guiding element so as to partially protrude from the recess. By arranging the vane wheel in such a recess, e.g. half embedding the vane wheel, only the exposed half of the vane wheel is exposed to the incoming wind, causing the vane wheel to rotate in a first direction. Any forces trying to rotate the vane wheel in the opposite direction can be avoided because the other half of the vane wheel is protected from the incoming wind, thereby improving efficiency of the wind turbine.

An auxiliary guiding element may be arranged upstream of the vane wheel, the auxiliary guiding element being wing-shaped and having an essentially straight slow side and a curved fast side, the fast side comprising a curvature forcing incoming wind to accelerate over the fast side, wherein the auxiliary guiding element is arranged in such a way as to guide incoming wind from its fast side onto the vanes of the vane wheel, wherein the fast side of the guiding element faces the fast side of the auxiliary guiding element. Such an auxiliary guiding element can be used to further increase the efficiency of the wind turbine by further accelerating incoming wind and directing it onto the vanes of the vane wheel.

According to a preferred embodiment, the vane wheel is retractably arranged in the recess. This acts as a type of breaking device for the wind turbine. Indeed, in strong winds, the vane wheel would be made to rotate too quickly, causing instabilities in the system. In order to avoid this, a breaking device is suggested in order to force the vane wheel to slow down. By retracting the vane wheel further into the recess, the total surface of the vane wheel exposed to the wind is reduced, thereby naturally slowing down rotation of the vane wheel. If the strength of the wind is again reduced, the vane wheel can be raised to protrude further from the recess, whereby the total surface of the vane wheel exposed to the wind is again increased.

According to another preferred embodiment, a type of breaking device for the wind turbine can be formed by a retractable breaking element arranged upstream of the vane wheel. In strong winds, the retractable breaking element is extended in order to break the wind impinging on the vane wheel. By extending the retractable breaking element in front of the vane wheel, the total surface of the vane wheel exposed to the wind is reduced, thereby naturally slowing down rotation of the vane wheel. If the strength of the wind is again reduced, the retractable breaking element can be retracted, whereby the total surface of the vane wheel exposed to the wind is again increased.

The retractable breaking element can for example be a curved cover arranged in the recess, the curved cover being configured and arranged so as to be able to be moved out of the recess and over the vane wheel.

Advantageously, a plurality of vane wheels are coupled together. A number of vane wheels, of identical or different configurations or shapes, can be coupled together, thereby improving the efficiency of the wind turbine. The coupling can be either direct, e.g. the vane wheels can be mounted on the same shaft, or indirect, e.g. the vane wheels can be coupled via gear mechanisms.

The guiding element is preferably rotatably mounted on a vertical post and comprises an orientation element for aligning the wind turbine with wind direction. By mounting the guiding element on a post, advantage can be taken of winds at higher altitude. It should be noted also that the wing shaped guiding element provides some degree of lift, thereby raising the guiding element from its seat and reducing friction. The guiding element can hence be aligned with the wind direction easily without having to apply considerable force to perform the rotation.

The orientation element can be formed by the shape of the guiding element. The shape of the guiding element can be adapted in such a way that the guiding element automatically aligns itself with wind direction.

Alternatively, or in addition, the orientation element can be formed by a rudder mounted to the guiding element. Such a rudder, preferably arranged near the trailing edge of the guiding device, i.e. the edge facing away from incoming wind, can be used to automatically align the guiding element with wind direction.

### BRIEF DESCRIPTION OF THE DRAWINGS

The present invention will be more apparent from the following description of one not limiting embodiment with reference to the attached drawing, wherein
- Fig.1:: shows a schematic perspective view of a wind turbine according to the present invention;
- Fig.2:: shows a schematic side view of the wind turbine of Fig.1; and
- Fig.3:: shows a schematic top view of the wind turbine of Fig.1.

### DETAILED DESCRIPTION OF PREFERRED EMBODIMENTS

The figures show a wind turbine 10 comprising a vane wheel 12 mounted in a recess 14 of a wing-shaped guiding element 16. The vane wheel 12 has a horizontal rotational axis 18 a plurality of vanes 20. The guiding element 16 has an essentially straight lower side 22, also referred to as "slow side", and a curved upper side 24, also referred to as "fast side". The guiding element 16 further comprises a leading edge 26 facing the wind and a trailing edge 28. Finally, the guiding element 16 comprises two sidewalls 30 to close off the structure.

The curvature of the upper side 24 extends over the leading edge 26 and is designed so as to accelerate incoming wind over the upper side 24 of the guiding element 16. The vane wheel 12 is arranged in the recess 14 in such a way that the wind blowing over the upper side 24 hits the vane wheel 12 at its upper half only, thereby rotating the vane wheel 12 in the direction as indicated by arrow 32.

Although not shown in the figures, it is worth mentioning that the wind turbine may comprise a breaking device for reducing the impact of the incoming wind on the vane wheel. Indeed, in strong winds, the vane wheel would be made to rotate too quickly, causing instabilities in the system. In order to avoid this, a breaking device is suggested, which may e.g. be formed by rendering the vane wheel 12 retractable with in the recess 14. In strong winds, the vane wheel 12 can be further retracted into the recess 14, whereby the surface of the vanes 20 protruding from the recess 14 is reduced. In turn, this means that the surface exposed to the wind is reduced and, consequently, the rotational speed of the vane wheel 12 is reduced.

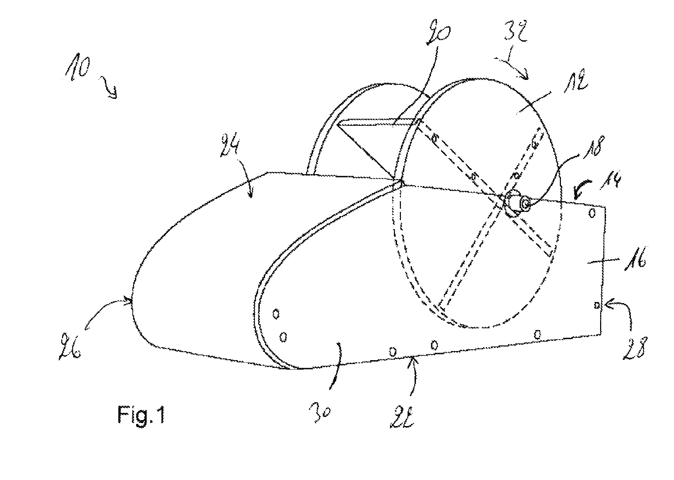

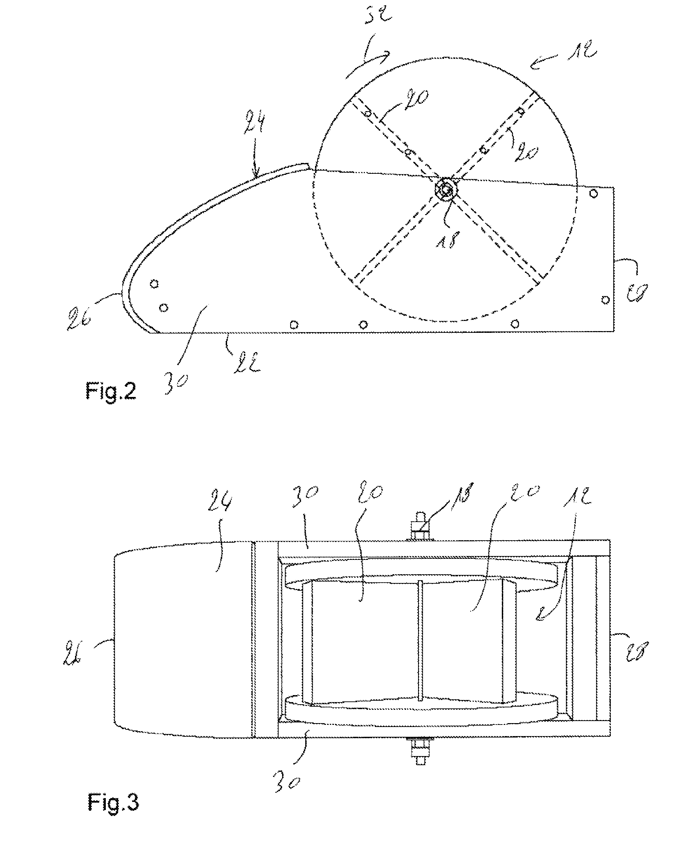

It should be noted that the Figures 1 to 3 are schematic and serve to illustrate the general inventive concept. Particular designs shown in these figures are not to be understood as limitative. For example, the illustrated wind turbine comprises a vane wheel with four straight vanes. It will be understood that a vane wheel with more than four or less then four vanes will not depart from the spirit and scope of the present invention. Likewise, curved vanes, instead of straight vanes, will not depart from the spirit and scope of the present invention. Also, the curvature of the guiding element is shown only for illustrative purposes.

### REFERENCE SIGNS

- 10: wind turbine
- 12: vane wheel
- 14: recess
- 16: guiding element
- 18: rotational axis
- 20: vane

- 22: slow side
- 24: fast side
- 26: leading edge
- 28: trailing edge
- 30: side walls
- 32: arrow

## Claims

1. Wind turbine comprising
a vane wheel having a rotational axis and a plurality of vanes, said rotational axis being essentially horizontal and essentially perpendicular to the direction of wind,
a guiding element for guiding incoming wind onto the vanes of said vane wheel
**characterized in that**
said guiding element is wing-shaped and has an essentially straight slow side and a curved fast side, said fast side comprising a curvature forcing incoming wind to accelerate over said fast side, wherein said guiding element is arranged in such a way as to guide incoming wind from its fast side onto said vanes of said vane wheel.

2. Wind turbine according to claim 1, wherein said guiding element has a cross-section similar to the cross-section of an airplane wing.

3. Wind turbine according to claim 1 or 2, wherein said vane wheel is arranged in a recess formed on said fast side of said guiding element so as to partially protrude from said recess.

4. Wind turbine according to any of claims 1 to 3, wherein an auxiliary guiding element is arranged upstream of said vane wheel, said auxiliary guiding element being wing-shaped and having an essentially straight slow side and a curved fast side, said fast side comprising a curvature forcing incoming wind to accelerate over said fast side, wherein said auxiliary guiding element is arranged in such a way as to guide incoming wind from its fast side onto the vanes of said vane wheel,
wherein said fast side of said guiding element faces said fast side of said auxiliary guiding element.

5. Wind turbine according to claim 3 or 4, wherein said vane wheel is retractably arranged in said recess.

6. Wind turbine according to any of claims 3 to 5, wherein a retractable breaking element is arranged upstream of the vane wheel

7. Wind turbine according to claim 6, wherein said retractable breaking element is a curved cover arranged in said recess, said curved cover being configured and arranged so as to be able to be moved out of said recess and over said vane wheel.

8. Wind turbine according to any of the previous claims, wherein a plurality of vane wheels are coupled together.

9. Wind turbine according to any of the previous claims, wherein said guiding element is rotatably mounted on a vertical post and comprises an orientation element for aligning said wind turbine with wind direction.

10. Wind turbine according to claim 9, wherein said orientation element is formed by the shape of said guiding element.

11. Wind turbine according to claim 9 or 10, wherein said orientation element is formed by a rudder mounted to said guiding element.
